# Europäisches Patentamt
## European Patent Office
## Office européen des brevets

(11) Publication number: **0 121 336**
**B1**

(12) **EUROPEAN PATENT SPECIFICATION**

(45) Date of publication of patent specification: **14.12.88**

(51) Int. Cl.⁴: **B 32 B 15/08, B 65 D 35/02**

(21) Application number: **84301371.5**

(22) Date of filing: **02.03.84**

(54) **Multi-layer flexible sheet structure for packaging, a package made therefrom, and a method of making the said structure.**

| | |
|---|---|
| (30) Priority: **05.04.83 US 482350** | (73) Proprietor: **AMERICAN NATIONAL CAN COMPANY**<br>**8101 West Higgins Road**<br>**Chicago Illinois 60631 (US)** |
| (43) Date of publication of application:<br>**10.10.84 Bulletin 84/41** | |
| | (72) Inventor: **Redding, Dwight Dennis**<br>**238 W. Seymour Street**<br>**Appleton Wisconsin 54915 (US)** |
| (45) Publication of the grant of the patent:<br>**14.12.88 Bulletin 88/50** | |
| (84) Designated Contracting States:<br>**AT BE CH DE FR GB IT LI LU NL SE** | (74) Representative: **Holdcroft, James Gerald, Dr. et al**<br>**Graham Watt & Co. Riverhead**<br>**Sevenoaks Kent TN13 2BN (GB)** |
| (56) References cited:<br>**US-A-3 343 663**<br>**US-A-3 347 419**<br>**US-A-4 363 841**<br>**US-A-4 364 989**<br>**US-A-4 418 841** | |

Courier Press, Leamington Spa, England.

# EP 0 121 336 B1

**Description**

This invention pertains to multiple layer flexible sheet structures for packaging and the use of such structures in flexible tubes of the type commonly used for packaging paste type products.

The invention also concerns the method of making such structures.

Thick metal foil as a single layer has long been used to hold and dispense paste type products. However, metal paste tubes have definite shortcomings. Compared to other tube structures, metal tubes are expensive, dent easily and tend to crack with a moderate amount of flexing.

Of recent times, a large share of the tube market has been taken by flexible sheet materials having a multiplicity of polymeric layers. Typical tubes have an inner heat sealable layer, an outer heat sealable layer, and a barrier layer interposed therebetween. Additional layers may further be used in conventional structures to provide other properties or qualities.

Layers of a non-polymeric nature, such as paper and thin metal foils, may also be included in these sheet materials to provide specialized performance functions.

It is known, for example, to provide a layer of thin aluminum foil as a high quality barrier layer. When foil is used, it is common practice to use a highly adhesive polymer to adhere it to adjacent layers of the structure.

While known structures have experienced success commercially, there has been a certain degree of failure with existing tube structures.

Certain products are particularly hard to package because their chemical activities result in the inner tube layers and particularly the aluminum foil layer being attacked. This problem has been addressed by using chemically resistant polymers as the tube interior layers to protect the foil. The most recent developments in that regard are described in our copending European patent application EP—A—0 109 465 (date of filing: 23.11.82; date of publication: 30.05.84), wherein the inner sealant layer of the tube is linear low density polyethylene copolymer.

It is also known to include a layer of paper, which may provide dimensional stability, which is particularly important for printing, and which also provides an aesthetically pleasing and aseptically clean appearing white background. Paper also improves deadfold retention.

A particular problem of tube failure is attributed to failure of the tubes due to rough handling during shipping. The tube sidewall may split, allowing the contents of the tube to ooze out. It has been observed that the paper layer is the weakest part of known laminates, and once it begins to fail, the entire tube is weakened and breaks.

The ability of a tube to withstand rough handling is related to its ability to withstand a drop test described hereinafter as a tube drop test, in which a tube filled with product is repeatedly dropped until the tube fails. All tubes shipped in commerce may be expected to be subjected to rough handling, regardless of the product contained, and are thus subject to handling stress as exemplified in the tube drop test. Economic construction of tubes consistently capable of passing the drop test has remained a problem. This problem has been addressed by using a strengthening layer of biaxially oriented polypropylene within the sheet structure, as described in the said application EP—A—0 109 465. As disclosed therein, the laminate contains a paper layer, and while certain improvements in strength are achieved, it is desirable to achieve dimensional stability in another structure which has the economy and stability of paper, and increased strength, to make an even more cost effective structure.

Another improvement in combatting the chemical activity of the product on the container is described in our copending European patent application EP—A—0 115 111 (date of filing: 28.01.83; date of publication: 08.08.84) which teaches the use of a polyacrylic acid chrome complex primer between the foil and an ethylene acrylic acid copolymer on the sealant side of the foil.

It is an object of this invention to make a dimensionally stable sheet structure without paper for use in making tubes, which structure has desired product holding chemical resistance, at a more economical cost, and deadfold retention qualities.

In its broadest aspect, the present invention provides a multiple-layer sheet structure for packaging, including a heat sealable layer forming an exterior surface of the structure, a polypropylene layer and an intervening adhesive layer, wherein the polypropylene layer at least is uniaxially oriented at a stretch ratio of 3/1 to 4/1 and this layer is disposed with the surface in contact with the adhesive layer being within 1.5 mil (0.038 mm) of the said exterior surface.

A multiple layer sheet embodying this structure and having two exterior surface layers may comprise a plurality of interior layers which, taken in order can be:

(a) a first heat sealable layer at a first one of said exterior surfaces;
(b) a first adhesive layer of ethylene acrylic acid copolymer; ·
(c) a metal foil layer;
(d) a second adhesive layer of ethylene acrylic acid copolymer;
(e) a first layer of polyethylene or an ethylene copolymer;
(f) a second layer of polyethylene or an ethylene copolymer;
(g) a primer layer;
(h) said layer of uniaxially oriented polypropylene;
(i) a third adhesive layer comprising the said intervening adhesive layer; and

2

(j) said heat sealable layer as a second heat sealable layer of the structure at the second one of said exterior surfaces.

In preferred structures according to this invention, the second heat sealable layer, the third adhesive layer, and the polypropylene layer, are produced by coextrusion as a three layer film and are all uniaxially oriented simultaneously as a three layer film, the orientation ratio being between 3/1 and 4/1. In the finished sheet structure the three layer oriented coextruded film is 2.0—2.5 mils (0.051 to 0.064 mm) thick and the polypropylene layer is about 1.0 mil (0.025 mm) thick.

In order that the preferred sheet material of the invention may be formed into tubular containers, it is essential that the first and second heat sealable layers be compatible for heat sealing to each other.

The invention is also embodied in a flexible dispensing tube made of the multiple layer sheet material, hereinabove described, with the uniaxially oriented layer or layers disposed toward the exterior surface of the tube.

The invention further comprehends a method of making a multiple layer sheet material. The steps of the method include, first coextruding a three layer film and uniaxially orienting it at an orientation ratio of 3/1 to 4/1 to produce an oriented film having three consecutive layers of 0.8 to 1.2 mils (0.02 to 0.03 mm) low density polyethylene, 0.2 to 0.3 mil (0.005 to 0.008 mm) ethylene methyl acrylate, and about 1.0 mil (0.025 mm) polypropylene. The oriented film is corona treated on the exposed polypropylene surface. The treated surface is then primed with polyethylene imine. A previously formed low density polyethylene film, having a thickness of 2.75 to 3.25 mils (0.07 to 0.08 mm) is then extrusion laminated to the treated and primed polypropylene layer, using about 1.0 mil (0.025 mm) of low density polyethylene as the extrusion laminant. The 2.75 to 3.25 mil (0.07 to 0.08 mm) low density polyethylene layer is then extrusion laminated to an aluminium foil layer using about 1.0 mil (0.025 mm) of ethylene acrylic acid copolymer as the extrusion laminant. Optionally, after this step the still exposed surface of the foil may be primed using a polyacrylic acid based primer.

The foil is finally coextrusion coated with a coextrudate of ethylene acrylic acid copolymer and polyethylene or linear low density polyethylene, the ethylene acrylic acid copolymer being coated onto the foil. The overall thickness of the sheet material is about 10 mils (0.25 mm).

Embodiments of the invention will now be described in more detail, by way of non limitative example only, with reference to the accompanying drawings, in which:

Figure 1 is a cross-section of a preferred embodiment of sheet structures according to the invention.

Figure 2 is a cross-section of another embodiment of the invention, which is slightly modified from the embodiment shown in Figure 1.

Figure 3 is a cross-section of still another embodiment of the invention, which combines the novel strengthening layers with more conventional sealant layer structure for disposition on the interior of the tube, and

Figure 4 is a partially cut-away view of a tube made from sheet structure according to this invention.

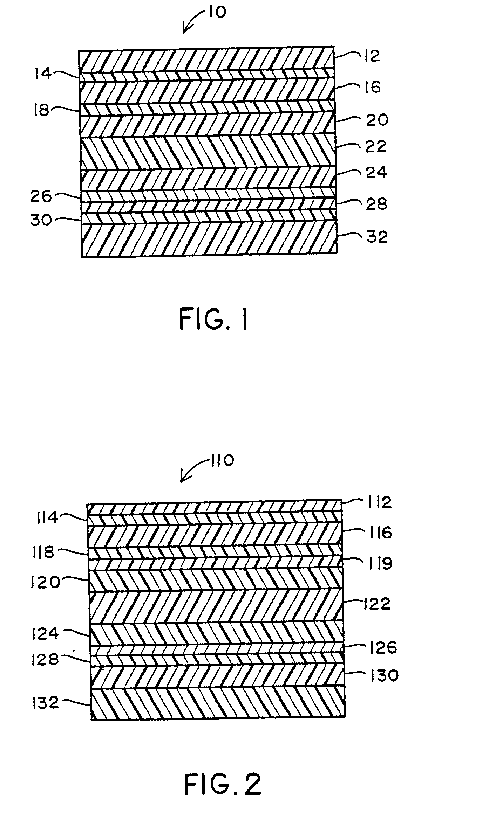

Turning now to the drawings, the numeral 10 in Figure 1 designates the entire multiple layer sheet structure cross-section. Layers 12 and 20 are low density polyethylene (LDPE). Layer 22 is pigmented LDPE. Layer 14 is ethylene methyl acrylate (EMA). Layer 16 is polypropylene (PP). Layer 18 is polyethylene imine (PEI) primer. Layers 24 and 30 are ethylene acrylic acid copolymer (EAA). Layer 26 is aluminum foil. Layer 28 is a polyacrylic acid chrome complex primer; and layer 32 is linear low density polyethylene (LLDPE).

With reference now to the particular combination of layers and their interactions with one another to form the dynamics of the invention, it is seen that layers 20 to 32 form a substructure which possesses features in common with our aforesaid European applications, although it will be seen that there is no paper in the present structure.

In pointing to the novelty of the structure, attention is concentrated on layers 12, 14 and 16. In particular, layer 16 alone has two parameters significant to the present invention. The first significant parameter is that the PP is uniaxially oriented, with orientation ratio of 3/1 to 4/1. The second significant parameter is its location in the structure. We have found that unexpected advantage is achieved when the uniaxially oriented PP layer is within 1.5 mils (0.04 mm) and preferably within 1.0 mil (0.025 mm) of the surface of the sheet structure which will form the outside of the tube.

In forming the sheet structure, it is economical and convenient to coextrude layers 12, 14 and 16 as a film substructure, and to uniaxially orient the three layer substructure, such that all of layers 12, 14 and 16 are uniaxially oriented. After orientation, the PP layer is then corona treated and primed with PEI primer (layer 18) before being extrusion laminated to the LDPE film of layer 20.

In Figure 2 the overall structure is designated 110. The layers in Figure 2 are numbered in the 100 series of numbers corresponding to the two digit numbers of like layers serving the same or similar functions in Figure 1. Thus, both layers 12 and 112 are LDPE layers serving as an outside layer of their structures and are heat sealable. Similar comparisons apply to all layers in Figure 2, except layers 114 and 119. Layer 114 is an anhydride modified polypropylene adhesive substituted in place of the EMA of layer 14 in Figure 1. Layer 119 is ink used for printing artwork on the PP layer.

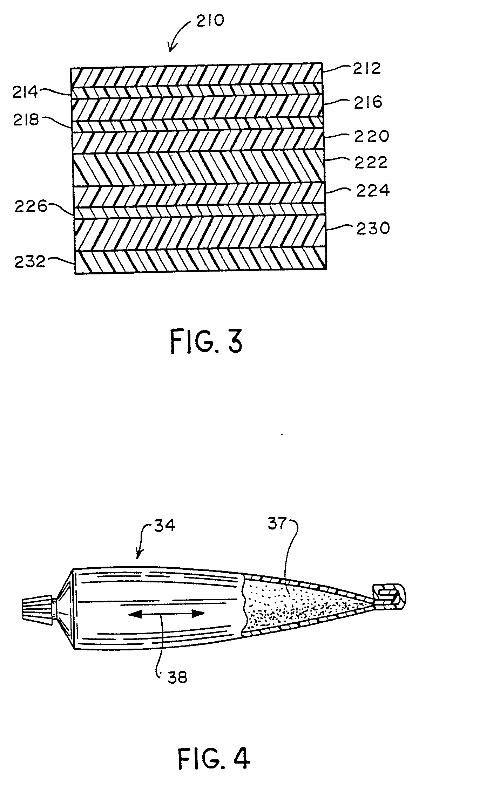

In Figure 3 the overall structure is designated 210. The layers in Figure 3 are numbered in the 200 series of numbers corresponding to the two digit numbers of like layers serving the same or similar functions in Figure 1. Thus layers 212, 214, and 216 represent the uniaxially oriented three layer substructure, 218 is PEI, 220 and 222 are LDPE. Layers 224 and 230 are EAA. Layer 226 is aluminum foil. Layer 232 is LDPE. Of the

3

illustrated embodiments, Figure 3 represents most closely the current commercial structures. It departs from currently commercial structures in (1) deletion of the paper layer, and (2) addition of the uniaxially oriented PP layer within 1.5 mils (0.04 mm) of the sheet surface. Layers 212 and 214 are, of course, conveniently also oriented.

Figure 4 represents an external view of a tube such as is made from sheet structure of the invention. The overall tube is designated 34, with part of the tube cut away to show contents 37. Extending longitudinally of the tube is a double-headed arrow designated 38. The arrow 38 represents that the direction of orientation of the uniaxially oriented layer is along the direction of the arrow, namely along the longitudinal axis of the tube.

In order to achieve the strength and deadfold-retention objectives of the invention, it is essential that the oriented PP layer be within 1.5 mils (0.04 mm) of the sheet surface. This puts certain limitations on layers 12 and 14. Since layer 12 is functionally a heat seal layer in forming the lap seal on the tube sidewall, it should desirably be as thick as possible, within the given limitations, in order consistently to form a good heat seal. Layer 14, then should be as thin as possible while still fulfilling its adhesive function of holding layers 12 and 16 together. In practice, layer 12 is between 0.8 and 1.2 mils (0.02 to 0.03 mm) thick and layer 14 is 0.2 to 0.3 mil (0.005 to 0.007 mm) thick. Layer 16 is desirably about 1 mil thick (0.025 mm).

While PEI is shown as a layer 18, it will be appreciated that, in its use as a primer, it is a thin coating and is shown as a layer for illustrative purposes only. Likewise layer 28. Layer 22 is usually a bulky, pre-formed film of pigmented white LDPE, and is about 2.75 to 3.25 mils (0.07 to 0.08 mm) thick. Layer 20 LDPE is conventionally used as an extrusion laminant to join layers 22 and 16, and is typically about 1.0 mil thick (0.025 mm).

Layer 24 is conventionally used as an extrusion laminant to join layer 22 to the foil of layer 26. The foil is advantageously between 0.25 and 0.7 mil (0.006 to 0.012 mm) thick, depending on the anticipated product and its use. The foil may be extrusion coated directly with a relatively thick layer of 2.0 mils (0.05 mm) of EAA and 1.2 mils (0.03 mm) of LDPE as in Figure 3. Alternatively, as shown in Figures 1 and 2, the foil may first be primed with polyacrylic acid chrome complex primer, layers 28 and 128. With the foil thus primed, the primer provides a certain degree of resistance to chemical attack. In these structures, the expensive EAA may be reduced to the amount required for its adhesive function, namely 0.5 mil (0.013 mm). The outer sealant layer of LLDPE is 2.0 mils (0.051 mm).

Tubes made with the sheet structures of this invention show an improved strength in surviving drop tests described hereinafter. Surprisingly, they also show increased retention of deadfold, also described hereinafter.

Example 1

LDPE, EMA, and PP are cast coextruded using three extruders feeding into a coextrusion die, and formed into a three-layer coextruded film. The coextruded film is uniaxially oriented at an orientation ratio of 3.2/1 to form an oriented three-layer substructure 2.0 mils (0.051 mm) thick, with the following thicknesses:

|           |            |
|-----------|------------|
| 0.8 mil LDPE | (0.02 mm) |
| 0.2 mil EMA  | (0.005 mm) |
| 1.0 mil PP   | (0.025 mm) |

The PP surface is corona treated and primed with PEI primer. The PP is then extrusion laminated to a previously formed 2.75 mil (0.07 mm) film of pigmented LDPE, using 1.0 mil (0.025 mm) LDPE as the extrusion laminant, to make a five layer substructure-excluding the primer. The 2.75 mil (0.07 mm) LDPE surface layer is then extrusion laminated to a 0.7 mil (0.018 mm) aluminum foil, using 1.0 mil (0.025 mm) EAA as the extrusion laminant. The opposite side of the foil is then primed with polyacrylic acid chrome complex primer and coextrusion coated with 0.5 mil (0.013 mm) EAA and 2.05 mils (0.053 mm) LLDPE, with the EAA against the foil, and the LLDPE layer forming the second outer surface of the completed sheet structure. The first outer surface is the LDPE in the uniaxially oriented three-layer substructure.

Example 2

Another sheet structure is made using the same processes and materials but with some different layer thicknesses, as follows. The three-layer oriented substructure is 2.5 mils (0.063 mm) thick, as follows:

|           |            |
|-----------|------------|
| 1.2 mils LDPE | (0.03 mm) |
| 0.3 mil EMA   | (0.0076 mm) |
| 1.0 mil PP    | (0.025 mm) |

The other differences are 0.25 mil (0.006 mm) foil and 2.0 mil (0.051 mm) LLDPE.

Example 3

Another sheet structure is made as in Example 2 using the same processes and materials, except as follows. The three-layer oriented substructure is two mils thick, as follows:

| 0.8 mil LDPE | (0.02 mm) |
| 0.2 mil Admer | (0.005 mm) |
| 1.0 mil PP | (0.025 mm) |

Admer (Registered Trade Mark) is an anhydride modified polypropylene-based adhesive polymer. After the PP layer is corona treated and primed, it is printed with ink before being extrusion laminated to the LDPE layer, which in this case is 3.25 mils (0.08 mm) thick instead of 2.75 mils (0.07 mm) as before.

Example 4

Yet another sheet structure is made as in Example 3 using the same processes and materials, except as follows. In the three layer oriented substructure, 0.2 mil (0.005 mm) EMA is substituted for the Admer. The ink is omitted. The extrusion laminant LDPE layer corresponding to layer 220 in Figure 3 is 0.8 mil (0.02 mm). The polyacrylic acid chrome complex primer is omitted; and the final three layers are:

| 0.25 mil foil | (0.006 mm) |
| 2.0 mils EAA | (0.05 mm) |
| 1.2 mils LDPE | (0.03 mm) |

Table 1 shows the complete structures of Examples 1—4 along with structures of comparative examples A, B and C which are not within the scope of this invention. Comparative example A is paperless, but does not contain a uniaxially oriented layer. Comparative example B contains a uniaxially oriented PP layer, but it is substantially farther than 1.5 mils (0.038 mm) from the surface of the sheet structure. Comparative example C is a conventional sheet structure used commercially to make toothpaste tubes.

TABLE I

### Ex. 1

| 0.8 mil LDPE* | (0.02 mm) |
| 0.2 mil EMA* | (0.005 mm) |
| 1.0 mil PP* | (0.025 mm) |
| Primer | |
| 1.0 mil LDPE | (0.025 mm) |
| 2.75 mils white LDPE | (0.07 mm) |
| 1.0 mil EAA | (1.025 mm) |
| 0.7 mil foil | (0.018 mm) |
| Primer | |
| 0.5 mil EAA | (0.013 mm) |
| 2.05 mils LLDPE | (0.064 mm) |
| 10.0 mils Total | (0.25 mm) |

### Ex. 2

| 1.2 mil LDPE* | (0.030 mm) |
| 0.3 mil EMA* | (0.008 mm) |
| 1.0 mil PP* | (0.025 mm) |
| Primer | |
| 1.0 mil LDPE | (0.025 mm) |
| 2.75 mils white LDPE | (0.07 mm) |
| 1.0 mil EAA | (0.025 mm) |
| 0.25 mil foil | (0.006 mm) |
| Primer | |
| 0.5 mil EAA | (0.013 mm) |
| 2.0 mils LLDPE | (0.051 mm) |
| 10.0 mils Total | (0.25 mm) |

### Ex. 3

| 0.8 mil LDPE* | (0.02 mm) |
| 0.2 mil Admer* | (0.005 mm) |
| 1.0 mil PP* | (0.025 mm) |
| Primer | |
| Ink | |
| 1.0 mil LDPE | (0.025 mm) |
| 3.25 mils white LDPE | (0.08 mm) |
| 1.0 mil EAA | (0.025 mm) |
| 0.25 mil foil | (0.006 mm) |
| Primer | |
| 0.5 mil EAA | (0.013 mm) |
| 2.0 mils LLDPE | (0.051 mm) |
| 10.0 mils Total | (0.25 mm) |

### Ex. 4

| 0.8 mil LDPE* | (0.02 mm) |
| 0.2 mil EMA* | (0.005 mm) |
| 1.0 mil PP* | (0.025 mm) |
| Primer | |
| 0.8 mil LDPE | (0.02 mm) |
| 3.25 mils white LDPE | (0.08 mm) |
| 1.0 mil EAA | (0.025 mm) |
| 0.25 mil foil | (0.006 mm) |
| 2.0 mils EAA | (0.051 mm) |
| 1.2 mils LDPE | (0.030 mm) |
| 10.0 mils Total | (0.25 mm) |

TABLE I (Continued)

|  | Comp. Ex. A |  |  | Comp. Ex. B |  |
|---|---|---|---|---|---|
| 2.5 mils LDPE | (0.064 mm) |  | 2.5 mils LDPE | (0.064 mm) |  |
| 0.5 mils LDPE | (0.013 mm) |  | 1.25 mils LDPE | (0.032 mm) |  |
| 3.25 mils white LDPE | (0.08 mm) |  | 2.0 mils PP* | (0.051 mm) |  |
| 1.0 mil EAA | (0.025 mm) |  | 1.5 mil white EAA | (0.038 mm) |  |
| 0.25 mil foil | (0.006 mm) |  | 0.25 mil foil | (0.006 mm) |  |
| | Primer | | | Primer | |
| 0.5 mil EAA | (0.013 mm) |  | 0.5 mil EAA | (0.013 mm) |  |
| 2.0 mils LLDPE | (0.051 mm) |  | 2.0 mils LLDPE | (0.051 mm) |  |
| 10.0 mils Total | (0.25 mm) |  | 10.0 mils Total | (0.025 mm) |  |

Comp. Ex. C

| 1.5 mils LDPE | (0.038 mm) |
|---|---|
| Ink |  |
| 2.0 mils white LDPE | (0.051 mm) |
| 1.6 mils paper | (0.041 mm) |
| 0.7 mils LDPE | (0.018 mm) |
| 3.3 mils EAA | (0.084 mm) |
| 0.7 mil foil | (0.018 mm) |
| 2.0 mils EAA | (0.051 mm) |
| 1.2 mils LDPE | (0.030 mm) |
| 13.0 mils Total | (0.33 mm) |

*Uniaxially oriented layer

Portions of the sheet structures of Examples 1, 2 and 3 and comparative Example A, B and C were made into dispensing tubes in known manner. That is, tubes were formed by forming a longitudinal lap seam by heat sealing techniques to form tubes 1—11/32 inches (34 mm) in diameter. The tubes were then cut to length and heads were injection molded into one end, including the use of conventional inserts, and capped. The tubes were filled with product and the ends sealed. The filled tubes were then subjected to testing to demonstrate their desired properties.

Drop tests

In a head drop test performed with tubes filled with toothpaste, a tube was dropped on its capped head from a height of 4 feet (1.22 m) onto a hard surface. The same tube was repeatedly dropped until it failed, with a maximum of 11 drops per tube, 3 tubes per variable.

In evaluating the tubes according to the drop tests, each drop was counted as one point, and the points for each Example were averaged to obtain a representative scoring for each Example. Table 2 shows that tubes made with sheet structures of this invention are physically as strong as tubes from the sheets of Comparative Examples A and B, and much stronger than tubes from the thicker sheet of Comparative Example C.

Deadfold tests

In the use of tubed product such as from a tube of toothpaste, it is desirable to be able to flatten the tube as the product is used, making subsequent dispensing easier. Thus the deadfold characteristics of a tube sheet structure material predict the ability of that tube to stay flat. The stay flat characteristic is specifically important when testing the fold on the side of the sheet structure that simulates the fold when a tube is flattened; namely folding onto itself that surface that would form the inside of the tube, such as layer 32 in Figure 1.

In performing the deadfold test a metal weight is used to establish the fold. The metal weight is a rectangular rod 1 inch (2.54 cm) square and 15 inches (38.1 cm) long, weighing 4 pounds (1.8 kg). Each test specimen of the sheet structure is 4 inches (10.1 cm) long and 1 inch (2.54 cm) wide. The strip is placed on a flat surface and bent over across its width without creasing it. The weight is then placed squarely and gently across the bent strip so that it folds it down flat and remains squarely on the folded strip. After 30 seconds the weight is removed and the sample is tipped on edge. 30 seconds after the weight is removed a protractor is used to read the angle formed by the crease, and the result is reported as an angle. Table 2 shows that deadfold retention for structures of this invention is better than deadfold retention of Comparative Examples A and B and, in the case of Example 1 is nearly as good as Comparative Example C.

6

TABLE 2

| Example | Caliper (mils) | | Drop strength | Deadfold retention |
|---------|------|------------|---------------|--------------------|
| 1 | 10.0 | (0.25 mm) | 11 | 23° |
| 2 | 10.0 | (0.25 mm) | 10 | 54° |
| 3 | 10.0 | (0.25 mm) | 9 | 34° |
| Comp A | 10.0 | (0.25 mm) | 11 | 104° |
| Comp B | 10.0 | (0.25 mm) | 8 | 76° |
| Comp C | 13.0 | (0.33 mm) | 1 | 22° |

To put the data into perspective, some basic overall comparisons need to be pointed out. The commercial structure of comparative Example C has good deadfold, poor drop strength, and is 30% thicker than the other examples, and is costlier. Comparative Examples A and B have good drop strengths and are comparatively less expensive, but have poor deadfold retention. The examples of the invention have good drop strength, are relatively inexpensive, and approach the commercial structure in deadfold characteristics.

As indicated hereinabove the strength and deadfold characteristics of the sheet structure materials of this invention are believed to be attributable to the uniaxial orientation of the PP layer in combination with its proper positioning in the structure. Thus it is anticipated that similar results will be obtained with similar structures wherein only the PP layer is oriented or wherein the PP and the LDPE layer such as at 12 in Figure 1 are oriented.

Those skilled in the art will see certain polymer substitutions which may be made without detracting from the overall performance of the sheet structure, depending on the intended use. The two outer layers of the structure, for example, may be made of other heat sealable polymers, so long as they are compatible for heat sealing purposes. Depending on the polymer selected for the outer layer 12, an alternate adhesive polymer may be selected for layer 14. Also, higher density polyethylene, or ethylene copolymers may, in some cases, be advantageously used instead of LDPE in the interior layers of the sheet structure, e.g. for layers 20 and 22. Likewise, any graphics, or other ink printing, could be done at an alternative layer surface to that shown in Figure 2.

Certain of the layers in the inventive structures herein are described as being uniaxially oriented. It has been discovered that the preferred direction of orientation is in the with-machine direction.

## Claims

1. A multiple-layer sheet structure for packaging including a heat sealable layer forming an exterior surface of the structure, a polypropylene layer and an intervening adhesive layer, wherein the polypropylene layer at least is uniaxially oriented at a stretch ratio of 3/1 to 4/1 and this layer is disposed with its surface in contact with the adhesive layer being within 1.5 mil (0.038 mm) of the said exterior surface.

2. A multiple layer sheet structure according to claim 1, having two exterior surface layers and a plurality of interior layers, and comprising, in order:
   (a) a first heat sealable layer (32, 132, 232) at a first one of said exterior surfaces;
   (b) a first adhesive layer (30, 130, 230) of ethylene acrylic acid copolymer;
   (c) a metal foil layer (26, 126, 226);
   (d) a second adhesive layer (24, 124, 224) of ethylene acrylic acid copolymer;
   (e) a first layer (22, 122, 222) of polyethylene or an ethylene copolymer;
   (f) a second layer (20, 120, 220) of polyethylene or an ethylene copolymer;
   (g) a primer layer (18, 118, 218);
   (h) said layer (16, 116, 216) of uniaxially oriented polypropylene;
   (i) a third adhesive layer (14, 114, 214) comprising said intervening adhesive layer; and
   (j) the heat sealable layer of claim 1 as a second heat sealable layer (12, 112, 212) of the structure at the second one of said exterior surfaces.

3. A structure according to claim 2, wherein the second heat sealable layer (12, 112, 212) is uniaxially oriented.

4. A structure according to claim 2, wherein the second heat sealable layer (12, 112, 212), said third adhesive layer (14, 114, 214) and said polypropylene layer (16, 116, 216) are produced by coextrusion as a three layer film and are uniaxially oriented simultaneously as a three layer film, the orientation ratio being from 3/1 to 4/1.

5. A structure according to claim 2, 3 or 4, wherein the said first and second heat sealable layers (32, 132, 232; 12, 112, 212) are compatible for heat sealing to one another.

6. A structure according to any of claims 2 to 5 including ink printing on said first primer (18, 118, 218) and between said first primer and said second layer (20, 120, 220) of polyethylene or ethylene copolymer.

7. A structure according to any of claims 2 to 6, further including a second primer (28, 128) between the metal foil (26, 126) and said first adhesive layer (30, 130).

8. A structure according to any of claims 2 to 7, wherein the first heat sealable layer (32, 132, 232) is linear low density polyethylene, there is a polyacrylic acid-based primer between the first adhesive layer and the metal foil, the two contiguous polyethylene layers are low density polyethylene, the said primer layer (18, 118, 218) is a polyethylene imine primer, the third adhesive layer is ethylene methyl acrylate; and the second heat sealable layer (12, 112, 212) is uniaxially oriented low density polyethylene, the third adhesive layer, the polypropylene layer and the second heat sealable layer all being uniaxially stretched and the stretch ratios all being the same, from 3/1 to 4/1.

9. A structure according to any of claims 2 to 8, wherein the three layers comprising the second heat sealable layer, the third adhesive layer and the polypropylene layer are *in toto* 2.0—2.5 mils (0.051—0.064 mm) thick and said polypropylene layer is about 1.0 mil (0.025 mm) thick.

10. A structure according to claim 9, wherein the second heat sealable layer is 1.2 mils (0.031 mm) thick, the third adhesive layer is 0.3 mil (0.008 mm) thick, and the overall sheet structure being about 10 mils (0.25 mm) thick.

11. A structure according to claim 9, wherein the second heat sealable layer is 0.8 mil (0.02 mm) thick, the third adhesive layer is 0.2 mil (0.005 mm) thick, and the overall sheet structure is about 10 mils (0.25 mm) thick.

12. A flexible dispensing tube made of the multiple layer sheet structure according to any of the preceding claims 1 to 11, having the first and second heat sealable layers at its inside and outside surfaces and being formed into a generally cylindrical shape having a lap heat seal between the first and second heat sealable surfaces, the surface of the uniaxially oriented polypropylene layer which is in contact with the intervening adhesive layer being within 1.5 mils (0.038 mm) of the exterior surface of the tube and the orientation direction running the length of the tube.

13. A flexible dispensing tube according to claim 12, wherein the polypropylene layer is disposed with its surface in contact with the adhesive layer being within 1 mil (0.025 mm) of the exterior surface of the tube.

14. A flexible dispensing tube according to claim 12 or claim 13, wherein the second heat sealable layer, the third adhesive layer and the polypropylene layer are all uniaxially oriented, their orientation ratios being 3/1 to 4/1, and the orientation direction running the length of the tube.

15. A method of making a multiple layer sheet structure comprising the steps of:

(a) coextruding a three layer film and uniaxially orienting it an orientation ratio of 3/1 and 4/1 to produce an oriented film having three consecutive layers of 0.8—1.2 mils (0.02—0.03 mm) low density polyethylene, 0.2 to 0.3 mil (0.005—0.008 mm) ethylene methyl acrylate, and about 1.0 mil (0.025 mm) polypropylene;

(b) corona treating the polypropylene surface of the oriented three layer film;

(c) priming the polypropylene surface of the oriented three layer film with polyethylene imine;

(d) extrusion laminating a previously formed low density polyethylene film, having a thickness of about 2.75 to 3.25 mils (0.07 to 0.08 mm) to said treated and primed polypropylene layer, using about 1.0 mil (0.025 mm) of low density polyethylene as the extrusion laminant;

(e) extrusion laminating said 2.75 to 3.25 mil (0.07 to 0.08 mm) low density polyethylene layer to an aluminum foil layer using about 1.0 mil (0.025 mm) of ethylene acrylic acid copolymer as the extrusion laminant; and

(f) coextrusion coating said foil with a coextrudate of ethylene acrylic acid copolymer and polyethylene or linear low density polyethylene, said ethylene acrylic acid copolymer being coated onto said foil; the overall thickness of said sheet material being about 10 mils (0.25 mm).

16. A method according to claim 15 and including the step of priming the aluminum foil with a polyacrylic acid chrome complex primer before coextrusion coating said foil.

## Patentansprüche

1. Mehrschichtiger Bahnaufbau zum Verpacken mit einer wärmeschweißfähigen Lage, die eine äußere Oberfläche des Lagenaufbaus bildet, eine Polypropylenlage und eine dazwischen liegende adhesive Lage, wobei die Polypropylenlage zumindest in einer Richtung mit einem Dehnungsverhältnis von 3/1 bis 4/1 ausgerichtet ist und diese Lage mit ihrer Oberfläche in Kontakt mit der adhesiven Lage innerhalb 1,5 mil (0,038 mm) der Außenoberfläche angeordnet ist.

2. Mehrschichtiger Bahnaufbau gemäß Anspruch 1, mit zwei Außenflächenlagen und einer Vielzahl von Innenlagen, in folgender Reihenfolge:

(a) eine erste wärmeschweißfähige Lage (32, 132, 232) auf einer ersten der Außenflächen;

(b) eine erste adhesive Lage (30, 130, 230) aus Ethylen-Acryl-Acid-Copolymer;

(c) eine Metallfolienlage (26, 126, 226);

(d) eine zweite adhesive Lage (24, 124, 224) aus Ethylen-Acryl-Acid-Copolymer;

(e) eine erste Lage (22, 122, 222) aus Polyethylen oder einem Ethylen-Copolymer;

(f) eine zweite Lage (20, 120, 220) aus Polyethylen oder einem Ethylen-Copolymer;

(g) eine Primer-Lage (18, 118, 218);

(h) die genannte Lage (16, 116, 216) aus in einer Richtung ausgerichtetem Polypropylen;

(i) eine dritte adhesive Lage (14, 114, 214), die die genannte zwischenliegende adhesive Lage umfaßt; und

(j) die wärmeschweißfähige Lage aus Anspruch 1 als eine zweite wärmeschweißfähige Lage (12, 112, 212) des Aufbaus auf der zweiten der Außenflächen.

3. Aufbau nach Anspruch 2, wobei die zweite wärmeschweißfähige Lage (12, 112, 212) in einer Richtung ausgerichtet ist.

4. Aufbau nach Anspruch 2, wobei die zweite wärmeschweißfähige Lage (12, 112, 212), die genannte dritte adhesive Lage (14, 114, 214) und die genannte Polypropylenlage (16, 116, 216) durch Coextrusion als ein Dreilagenfilm hergestellt und gleichzeitig als ein Dreilagenfilm in einer Richtung gereckt sind, wobei das Reckverhältnis von 3/1 bis 4/1 beträgt.

5. Aufbau nach Anspruch 2, 3 oder 4, wobei die genannten ersten und zweiten heißschweißbaren Lagen (32, 132, 232; 12, 112, 212) zum Heißschweißen miteinander copatibel sind.

6. Aufbau nach mindestens einem der Ansprüche 1 bis 5, wobei ein Tintenbedrucken auf die erste Primärlage (18, 118, 218) und zwischen der genannten ersten Primär und der genannten zweiten Lage (20, 120, 220) aus Polyethylen oder Ethylen-Copolymer vorgesehen sind.

7. Aufbau nach mindestens einem der Ansprüche 2 bis 6, wobei eine zweite Primärlage (28, 128) zwischen der Metallfolie (26, 126) und der genannten ersten Adhesivlage (30, 130) vorgesehen ist.

8. Aufbau nach mindestens einem der Ansprüche 2 bis 7, wobei die erste heißschweißfähige Lage (32, 132, 232) aus linearem niedrig dichtem Polyethylen besteht, zwischen der ersten adhesiven Lage und der Metallfolie eine auf Polyacrylsäurebasis hergestellte Primerlage angeordnet ist, die beiden durchgehenden Polyethylenlagen aus niedrig dichtem Polyethylen bestehen, die genannten Primärlage (18, 118, 218) ein Polyethylen Imin Primer ist, die dritte adhesive Lage ein Ethylen - Methyl - Acrylat ist und die zweite warmschweißbare Lage (12, 112, 212) aus in einer Richtung gerecktem niedrig dichte Polyethylen ist, die dritte adhesive Lage, die Polypropylenlage und die zweite wärmeschweißfähige Lage, die Polypropylenlage und die zweite warmschweißbare Lage, alle in einer Richtung gedehnt und die Dehnverhältnisse alle die gleichen sind, nämlich von 3/1 bis 4/1.

9. Aufbau gemäß mindestens einem der Ansprüche 2 bis 8, wobei die drei Lagen, die die zweiten wärmeschweißfähige Lage, die dritte adhesive Lage und die Polypropylenlage enthalten, *in toto* 2,0—2,5 mils (0,051—0,064 mm) dick sind und die Polypropylenlage ca. 1,0 mil (0,025 mm) aufweist.

10. Aufbau nach Anspruch 9, wobei die zweite wärmeschweißfähige Lage 1,2 mils (0,032 mm) dick ist, die dritte adhesive Lage 0,3 mil (0,008 mm) dick und die Gesamtdicke der Bahnstruktur ca. 10 mils (0,25 mm) beträgt.

11. Aufbau gemäß Anspruch 9, wobei die zweite wärmeschweißfähige Lage 0,8 mil (0,02 mm), die dritte adhesive Lage 0,2 mil (0,005 mm) dick ist und die Gesamtdicke der Struktur der Bahn ca. 10 mils (0,25 mm) beträgt.

12. Biegsame Spende-Tube, hergestellt aus der mehrschichtigen Strukturbahn gemäß mindestens einem der vorangegangenen Ansprüche 1 bis 11, wobei die erste und zweite heißschweißfähigen Lagen an ihren Innen- und Außenoberflächen angeordnet und in einer im wesentlichen zylindrischen Gesalf geformt sind mit einer Falzwärmeschweißung zwischen der ersten und zweiten schweißfähigen Oberfläche, wobei die Oberfläche der in einer Richtung gedehnten Polypropylenlage, die in Kontakt mit der inneren adhesiven Lage ist, innerhalb 1,5 mils (0,038 mm) der Außenfläche der Tube ist und die Reckrichtung in Längsrichtung der Tube verläuft.

13. Biegsame Tube nach Anspruch 12, wobei die Polypropylenlage, die mit ihrer Oberfläche in Kontakt mit der adhesiven Lage ist, innerhalb 1 mil (0,025 mm) der Außenfläche der Tube liegt.

14. Biegsame Tube nach Anspruch 12 oder 13, wobei die zweite wärmeschweißfähige Lage, die dritte adhesive Lage und die Polypropylenlage alle in einer Richtung orientiert sind, wobei ihr Reckverhältnis zwischen 3/1 bis 4/1 ist und die Orientierungsrichtung in Längsrichtung der Tube verläuft.

15. Verfahren zum Herstellen einer mehrschichtigen Lagenstruktur mit den folgenden Verfahrensschritten:

(a) Koextrudieren eines dreilagigen Films und Recken in einer Richtung in einem Dehnverhältnis von 3/1 und 4/1, um einen ausgerichteten Film mit drei aufeinanderliegenden Lagen von 0,8 bis 1,2 mils (0,02—0,03 mm) Polyethylen niedriger Dichte, 0,2—0,3 mil (0,005—0,008 mm) Ethylen - Methyl - Acrylat und ca. 1,0 mil (0,025 mm) Polypropylen zu erzeugen;

(b) Korona-Behandlung der Polypropylenoberfläche des gerecktem dreilagigen Films;

(c) Grundieren der Polypropylenoberfläche des gerichteten dreilagigen Films mit Polyethylenimin;

(d) Extrusionslaminieren eines zuvor gebildeten Polyethylenfilms geringer Dichte mit einer Dicke von

9

## EP 0 121 336 B1

ca. 2,75—3,25 mils (0,07 bis 0,08 mm) auf die genannte behandelte und grundierte Polypropylenlage, wobei ca. 1,0 mil (0,025 mm) Polyethylen geringer Dichte als Extrusionslaminat verwendet wird;

(e) Extrusionslaminieren der 2,75—3,25 mils (0,07—0,08 mm) Propylenlage geringer Dichte auf eine Aluminiumfolienlage, wobei ca. 1,0 mil (0,025 mm) Ethylenacrylsäure Copolymer als Extrusionslaminat verwendet wird; und

(f) Koextrusionsbeschichten der Folie mit einem Koextrudat das Ethylen-Acrylsäure Copolymer und Polyethylen oder linearem Polyethylen geringer Dichte, wobei das Ethylen-Acrylsäure Copolymer auf die Folie geschichtet wird, und wobei die Gesamtdicke des Bahnmaterials ca. 10 mils (0,25 mm) beträgt.

16. Verfahren nach Anspruch 15 mit dem Verfahrensschritt des Grundierens der Aluminiumfolie mit einem Polyacrylsäure - Chromkomplex - Grundierer vor dem Koextrusionsbeschichten der Folie.

**Revendications**

1. Structure de feuille multicouche pour l'emballage, comprenant une couche thermoscellable formant une surface extérieure de la structure, une couche de polypropylène et une couche intermédiaire d'adhésif, dans laquelle la couche de polypropylène, au moins, est orientée uniaxialement à un rapport d'étirage de 3/1 à 4/1 et cette couche est disposée de façon que sa surface soit en contact avec la couche d'adhésif à moins de 1,5 mil (0,038 mm) de ladite surface extérieure.

2. Structure de feuille multicouche selon la revendication 1, comportant deux couches de surface extérieure et plusieurs couches intérieures, et comprenant, dans l'ordre:

(a) une première couche thermoscellable (32, 132, 232) à une première desdites surfaces extérieures;

(b) une première couche d'adhésif (30, 130, 230) en copolymère d'éthylène et d'acide acrylique;

(c) une couche en film de métal (26, 126, 226);

(d) une deuxième couche d'adhésif (24, 124, 224) en copolymère d'éthylène et d'acide acrylique;

(e) une première couche (22, 122, 222) de polyéthylène ou d'un copolymère d'éthylène;

(f) une deuxième couche (20, 120, 220) de polyéthylène ou d'un copolymère d'éthylène;

(g) une couche d'apprêt (18, 118, 218);

(h) ladite couche (16, 116, 216) de polypropylène uniaxialement orienté;

(i) une troisième couche d'adhésif (14, 114, 214) comprenant ladite couche d'adhésif intermédiaire; et

(j) la couche thermoscellable de la revendication 1 en tant que seconde couche thermoscellable (12, 112, 212) de la structure, à la seconde desdites surfaces extérieures.

3. Structure selon la revendication 2, dans laquelle la seconde couche thermoscellable (12, 112, 212) est uniaxialement orientée.

4. Structure selon la revendication 2, dans laquelle la seconde couche thermoscellable (12, 112, 212), ladite troisième couche d'adhésif (14, 114, 214) et ladite couche (16, 116, 216) de polypropylène sont produites par coextrusion sous la forme d'un film à trois couches et sont uniaxialement orientées simultanément sous la forme d'un film à trois couches, le rapport d'orientation étant de 3/1 à 4/1.

5. Structure selon la revendication 2, 3 ou 4, dans laquelle lesdites première et seconde couches thermoscellables (32, 132, 232; 12, 112, 212) sont compatibles pour être thermoscellées entre elles.

6. Structure selon l'une quelconque des revendications 2 à 5, comprenant une impression à l'encre sur ledit premier apprêt (18, 118, 218) entre ledit premier apprêt et ladite seconde couche (20, 120, 220) de polyéthylène ou d'un copolymère d'éthylène.

7. Structure selon l'une quelconque des revendications 2 à 6, comprenant en outre un second apprêt (28, 128) entre le film de métal (26, 126) et ladite première couche d'adhésif (30, 130).

8. Structure selon l'une quelconque des revendications 2 à 7, dans laquelle la première couche thermoscellable (32, 132, 232) est en polyéthylène linéaire, basse densité, un apprêt à base d'acide polyacrylique se trouve entre la première couche d'adhésif et le film de métal, les deux couches contiguës de polyéthylène sont en polyéthylène basse densité, ladite première couche d'apprêt (18, 118, 218) est un apprêt en polyéthylèneimine, la troisième couche d'adhésif est en éthylèneméthylacrylate; et la seconde couche thermoscellable (12, 112, 212) est en polyéthylène basse densité, uniaxialement orienté, la troisième couche d'adhésif, la couche de polypropylène et la seconde couche thermoscellable étant toutes uniaxialement étirées et les rapports d'étirage étant tous les mêmes, de 3/1 à 4/1.

9. Structure selon l'une quelconque des revendications 2 à 8, dans laquelle les trois couches comprenant la seconde couche thermoscellable, la troisième couche d'adhésif et la couche de polypropylène ont, au total, une épaisseur de 2,0—2,5 mils (0,051—0,064 mm) et ladite couche de polypropylène a une épaisseur d'environ 1,0 mil (0,025 mm).

10. Structure selon la revendication 9, dans laquelle la seconde couche thermoscellable a une épaisseur de 1,2 mil (0,031 mm), la troisième couche d'adhésif à une épaisseur de 0,3 mil (0,008 mm) et la structure de feuille globale a une épaisseur d'environ 10 mils (0,25 mm).

11. Structure selon la revendication 9, dans laquelle la seconde couche thermoscellable a une épaisseur de 0,8 mil (0,02 mm), la troisième couche d'adhésif a une épaisseur de 0,2 mil (0,005 mm) et la structure de feuille globale a une épaisseur d'environ 10 mils (0,25 mm).

12. Tube distributeur souple formé de la structure de feuille multicouche selon l'une quelconque des revendications précédentes 1 à 11, ayant les première et seconde couches thermoscellables à ses surfaces intérieure et extérieure et étant façonné en une forme globalement cylindrique ayant un joint thermoscellé

**EP 0 121 336 B1**

à recouvrement entre les première et seconde surfaces thermoscellables, la surface de la couche de polypropylène uniaxialement orienté, qui est en contact avec la couche d'adhésif intermédiaire, étant à moins de 1,5 mil (0,038 mm) de la surface extérieure du tube et la direction d'orientation suivant la longueur du tube.

13. Tube distributeur souple selon la revendication 12, dans lequel la couche de polypropylène est disposée de façon que sa surface en contact avec la couche d'adhésif soit à moins de 1 mil (0,025 mm) de la surface extérieure du tube.

14. Tube distributeur souple selon la revendication 12 ou la revendication 13, dans lequel la seconde couche thermoscellable, la troisième couche d'adhésif et la couche de polypropylène sont toutes uniaxialement orientées, leurs rapports d'orientation étant de 3/1 à 4/1, et la direction d'orientation suivant la longueur du tube.

15. Procédé de fabrication d'une structure de feuille multicouche comprenant les étapes qui consistent:

(a) à coextruder un film à trois couches et à l'orienter uniaxialement dans un rapport d'orientation de 3/1 à 4/1 pour produire un film orienté ayant trois couches consécutives de 0,8—1,2 mil (0,02—0,03 mm) en polyéthylène basse densité, de 0,2 à 0,3 mil (0,005—0,008 mm) en éthylène-méthylacrylate, et d'environ 1,0 mil (0,025 mm) en polypropylène;

(b) à traiter par décharge d'effluves la surface de polypropylène du film orienté à trois couches;

(c) à apprêter la surface de polypropylène du film orienté à trois couches avec du polyéthylène-imine;

(d) à stratifier par extrusion un film de polyéthylène basse densité, précédemment formé, ayant une épaisseur d'environ 2,75 à 3,25 mils (0,07 à 0,08 mm) sur ladite couche de polypropylène traitée et apprêtée, en utilisant environ 1,0 mil (0,025 mm) de polyéthylène basse densité en tant que stratifiant d'extrusion;

(e) à stratifier par extrusion ladite couche de 2,75 à 3,25 mils (0,07 à 0,08 mm) de polyéthylène basse densité sur une couche formée d'un film d'aluminium en utilisant environ 1,0 mil (0,025 mm) d'un copolymère d'éthylène et d'acide acrylique en tant que stratifiant d'extrusion; et

(f) à revêtir par coextrusion ledit film d'un coextrudat de copolymère d'éthylène et d'acide acrylique et de polyéthylène ou de polyéthylène linéaire basse densité, ledit copolymère d'éthylène et d'acide acrylique étant appliqué sur ledit film; l'épaisseur globale de ladite matière en feuille étant d'environ 10 mils (0,25 mm).

16. Procédé selon la revendication 15, comprenant l'étape qui consiste à apprêter le film d'aluminium avec un apprêt constitué d'un complexe de chrome et d'acide polyacrylique avant le revêtement de coextrusion dudit film.

FIG. 1

FIG. 2

FIG. 3

FIG. 4